(19) Europäisches Patentamt
European Patent Office
Office européen des brevets

(11) **EP 4 332 127 A1**

(12) **EUROPEAN PATENT APPLICATION**
published in accordance with Art. 153(4) EPC

(43) Date of publication:
**06.03.2024 Bulletin 2024/10**

(21) Application number: **22795741.2**

(22) Date of filing: **25.04.2022**

(51) International Patent Classification (IPC):
***C08F 8/12*** *(2006.01)*     ***C08F 16/06*** *(2006.01)*

(52) Cooperative Patent Classification (CPC):
**C08F 8/12; C08F 16/06**

(86) International application number:
**PCT/JP2022/018783**

(87) International publication number:
**WO 2022/230828 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.04.2021 JP 2021075378**

(71) Applicant: **Kuraray Co., Ltd.
Kurashiki-shi, Okayama 710-0801 (JP)**

(72) Inventors:
• **FUJIMORI Misuzu
Kurashiki-shi, Okayama 713-8550 (JP)**
• **TAOKA Yuta
Kurashiki-shi, Okayama 713-8550 (JP)**

(74) Representative: **Müller-Boré & Partner
Patentanwälte PartG mbB
Friedenheimer Brücke 21
80639 München (DE)**

(54) **VINYL ALCOHOL POLYMER, POWDER INCLUDING SAME, METHODS FOR PRODUCING SAME, PAPER PROCESSING AGENT, AND DISPERSANT FOR EMULSION POLYMERIZATION**

(57) A vinyl alcohol polymer including a structural unit derived from at least one selected from the group consisting of: a monomer having a carboxy group; and a derivative of the monomer, wherein the vinyl alcohol polymer has: a minimum degree of branching of 0.93 or less within a range of an absolute molecular weight being 200,000 or more and 800,000 or less; a viscosity-average degree of polymerization of 750 or less; and a degree of saponification of 65 mol% or more.

FIG. 2

EP 4 332 127 A1

**Description**

[TECHNICAL FIELD]

The present invention relates to a vinyl alcohol polymer, a powder containing the same, methods for producing these, a paper processing agent, and a dispersant for emulsion polymerization.

[BACKGROUND ART]

A vinyl alcohol polymer (hereinafter, may be referred to as "PVA") is known as a water-soluble synthetic polymer, and used for a wide range of intended usages such as paper processing, fiber processing, adhesives, emulsion stabilizers for polymerization and suspension polymerization, binders for inorganic substances, and films.
As one type of modified PVAs, a PVA including a structural unit derived from a carboxylic acid or a derivative thereof has been known (see Patent Document 1). Taking advantage of reactivity and the like of the carboxylic acid, such a PVA has been used for: a sizing agent of acidic paper containing aluminum sulfate; a water-resistant coating film being combined with a crosslinking agent; an adhesive; and the like. In addition, due to water solubility being favorable, the PVA is useful also for water-soluble films for packaging of pesticides, laundry detergents, industrial chemicals, and the like, and thus has been widely utilized.

[PRIOR ART DOCUMENTS]

[Patent Documents]

Patent Document 1: PCT International Publication No. 2018/061272

[SUMMARY OF THE INVENTION]

[Problems to be Solved by the Invention]

In industrial manufacture of PVA films, an aqueous PVA solution containing water as a solvent is typically used as a film-forming solution, taking into consideration an environmental aspect, economical efficiency, and the like. Furthermore, even in the case in which the PVA is used as a component of a coating agent and/or an adhesive, water is frequently used as a solvent. In a case in which an aqueous PVA solution is used as a film-forming solution, a coating agent, adhesive, paper processing agent, or the like, the aqueous PVA solution is preferably prepared using the PVA at a high concentration, in light of shortening of a drying time period, reduction of energy required for drying, and the like. Moreover, also in a case of using the PVA as a dispersant for emulsion polymerization, the aqueous PVA solution may be prepared using the PVA at a high concentration. However, conventional aqueous PVA solutions are disadvantageous in that the viscosity prominently increases when prepared at a high concentration, thereby leading to deterioration of coating characteristics, and the like.
The present invention was made for solving the aforementioned problems, and an object of the invention is to provide: a PVA prevented from an increase in viscosity when prepared into an aqueous solution of a high concentration; a powder containing such a PVA; methods for producing these; and a paper processing agent and a dispersant for emulsion polymerization each containing such a PVA.

[Means for Solving the Problems]

The object described above is accomplished by providing any one of the following:

(1) A PVA including a structural unit derived from at least one selected from the group consisting of: a monomer having a carboxy group; and a derivative of the monomer, wherein the PVA has: a minimum degree of branching of 0.93 or less within a range of an absolute molecular weight being 200,000 or more and 800,000 or less; a viscosity-average degree of polymerization of 750 or less; and a degree of saponification of 65 mol% or more;
(2) The PVA according to (1), wherein the at least one selected from the group consisting of: a monomer having a carboxy group; and a derivative of the monomer is at least one selected from the group consisting of an ethylenic unsaturated dicarboxylic acid, a monoester of an ethylenic unsaturated dicarboxylic acid, a diester of an ethylenic unsaturated dicarboxylic acid, and an anhydride of an ethylenic unsaturated dicarboxylic acid;
(3) The PVA according to (1), wherein the at least one selected from the group consisting of: a monomer having a carboxy group; and a derivative of the monomer is at least one selected from the group consisting of maleic acid, a maleic acid monoalkyl ester, a maleic acid dialkyl ester, maleic anhydride, fumaric acid, a fumaric acid monoalkyl ester, and a fumaric acid dialkyl ester;

(4) The PVA according to any one of (1) to (3), which satisfies the following inequality (I):

$$S \times P > 250 \qquad (I)$$

wherein, in the inequality (I),
S represents a percentage content (mol%), with respect to total structural units, of the structural unit derived from at least one selected from the group consisting of: the monomer having a carboxy group; and the derivative of the monomer; and P represents the viscosity-average degree of polymerization;

(5) The PVA according to any one of (1) to (4), which satisfies the following inequality (II):

$$1.0 < g_A/g_B < 9.0 \qquad (II)$$

wherein, in the inequality (II), $g_A$ represents a degree of branching of the vinyl alcohol polymer having an absolute molecular weight of 200,000; and $g_B$ represents a degree of branching of the vinyl alcohol polymer having an absolute molecular weight of 800,000;

(6) The PVA according to any one of (1) to (5), wherein an insoluble content of a mixture prepared by adding 4 parts by mass of the PVA to 96 parts by mass of water followed by stirring at 60 °C for 1 hour is 0.1 ppm or more and less than 2,000 ppm;

(7) A powder containing the PVA according to any one of (1) to (6);

(8) The powder according to (7), wherein a percentage content of the powder capable of passing through a sieve having a mesh opening size of 180 $\mu$m is 12% by mass or less;

(9) The powder according to (7) or (8), wherein a percentage content of the powder capable of passing through a sieve having a mesh opening size of 1.00 mm is 97% by mass or more, and a percentage content of the powder capable of passing through a sieve having a mesh opening size of 500 $\mu$m is 40% by mass or more;

(10) A method for producing the PVA according to any one of (1) to (6), the method including: a step (1) of obtaining a copolymer of a vinyl ester with at least one selected from the group consisting of: a monomer having a carboxy group; and a derivative of the monomer; a step (2) of obtaining a saponification product of the copolymer; and a step (3) of subjecting the saponification product to a heat treatment, wherein in the step (3), a heat treatment temperature is 110 °C or more, and a heat treatment time period is 1 hour or more;

(11) A method for producing the powder according to any one of (7) to (9), the method including: a step (1) of obtaining a copolymer of a vinyl ester with at least one selected from the group consisting of: a monomer having a carboxy group; and a derivative of the monomer; a step (2) of obtaining a saponification product of the copolymer; and a step (3) of subjecting the saponification product to a heat treatment, wherein in the saponification product upon completion of the step (3), a percentage content of the powder capable of passing through a sieve having a mesh opening size of 180 $\mu$m is 12% by mass or less;

(12) A paper processing agent containing the PVA according to any one of (1) to (6); and

(13) A dispersant for emulsion polymerization containing the PVA according to any one of (1) to (6).

[Effects of the Invention]

The present invention enables providing: a PVA prevented from an increase in viscosity when prepared into an aqueous solution of a high concentration; a powder containing such a PVA; methods for producing these; and a paper processing agent and a dispersant for emulsion polymerization each containing such a PVA.

[BRIEF DESCRIPTION OF THE DRAWINGS]

FIG. 1 is a graph showing a relationship between each absolute molecular weight and each intrinsic viscosity ($[\eta]_{branch}$ and $[\eta]_{linear}$) of PVA-1 and PVA-1' in Examples; and
FIG. 2 is a graph showing a relationship between the absolute molecular weight and the degree of branching ($g_m$) of PVA-1 in Examples.

[DESCRIPTION OF EMBODIMENTS]

Hereinafter, embodiments for carrying out the present invention are described. It is to be noted that in the present specification, upper limit values and lower limit values of ranges of numerical values (contents of components, values and physical properties calculated from components, etc.) can be combined as appropriate.

PVA

The PVA (vinyl alcohol polymer) of the present invention is a PVA including a structural unit derived from at least one selected from the group consisting of: a monomer having a carboxy group; and a derivative of the monomer, wherein the PVA has: a minimum degree of branching of 0.93 or less within a range of an absolute molecular weight being 200,000 or more and 800,000 or less; a viscosity-average degree of polymerization of 750 or less; and a degree of saponification of 65 mol% or more. Hereinafter, the "at least one selected from the group consisting of: a monomer having a carboxy group; and a derivative of the monomer" may be referred to as "monomer (a)".

The PVA of the present invention includes a vinyl alcohol unit and the structural unit derived from the monomer (a). The PVA is obtained, typically, by subjecting a vinyl ester polymer including the structural unit derived from the monomer (a) (a copolymer of the monomer (a) and a vinyl ester) to saponification. The derivative of the monomer having a carboxy group is exemplified by esters, anhydrides, etc., of the monomer having a carboxy group. The carboxy group (-COOH) may be present in a state of a salt (-COONa, etc.). The structural unit derived from the monomer (a) may form a cross-linked structure and bond to an other structural unit. The monomer (a) is exemplified by an ethylenic unsaturated monocarboxylic acid, an ethylenic unsaturated dicarboxylic acid, and derivatives of these.

Examples of the ethylenic unsaturated monocarboxylic acid and the derivative thereof include acrylic acid, methacrylic acid, methyl acrylate, ethyl acrylate, methyl methacrylate, ethyl methacrylate, and the like.

The ethylenic unsaturated dicarboxylic acid and the derivative thereof are exemplified by ethylenic unsaturated dicarboxylic acids, a monoester thereof, a diester thereof, an anhydride thereof, and the like. Examples of the ethylenic unsaturated dicarboxylic acid include maleic acid, fumaric acid, citraconic acid, mesaconic acid, itaconic acid, and the like. Examples of the monoester of the ethylenic unsaturated dicarboxylic acid include monoalkyl unsaturated dicarboxylic acid esters such as monomethyl maleate, monoethyl maleate, monomethyl fumarate, monoethyl fumarate, monomethyl citraconate, monoethyl citraconate, monomethyl mesaconate, monoethyl mesaconate, monomethyl itaconate, and monoethyl itaconate. Examples of the diester of the ethylenic unsaturated dicarboxylic acid include dialkyl unsaturated dicarboxylic acid esters such as dimethyl maleate, diethyl maleate, dimethyl fumarate, diethyl fumarate, dimethyl citraconate, diethyl citraconate, dimethyl mesaconate, diethyl mesaconate, dimethyl itaconate, and diethyl itaconate. Examples of the anhydride of the ethylenic unsaturated dicarboxylic acid include maleic anhydride, citraconic anhydride, and the like.

In light of industrial availability, reactivity with a vinyl ester, and the like, the monomer (a) is preferably the ethylenic unsaturated dicarboxylic acid, and a monoester of the ethylenic unsaturated dicarboxylic acid, a diester of the ethylenic unsaturated dicarboxylic acid, and an anhydride of the ethylenic unsaturated dicarboxylic acid, more preferably maleic acid, a maleic acid monoalkyl ester, a maleic acid dialkyl ester, maleic anhydride, fumaric acid, a fumaric acid monoalkyl ester, and a fumaric acid dialkyl ester, and particularly preferably monomethyl maleate, dimethyl maleate, maleic anhydride, monomethyl fumarate, and dimethyl fumarate. One type, or two or more types of the monomer (a) may be used.

The lower limit of a percentage content of (S) of the structural unit derived from the monomer (a) with respect to total structural units of the PVA of the present invention is preferably 0.1 mol%, more preferably 0.5 mol%, still more preferably 1.0 mol%, and particularly preferably 1.5 mol%. On the other hand, the upper limit of the percentage content of (S) is preferably 15 mol%, more preferably 10 mol%, and still more preferably 5 mol%, and may be even more preferably 3 mol%. When the percentage content of (S) falls within the above range, effects achievable by modification with carboxylic acid, i.e., effects of introduction of the structural unit derived from the monomer (a) can be sufficiently exerted, and an increase in viscosity in a case of preparing an aqueous solution of a high concentration can be sufficiently inhibited. In addition, due to the percentage content of (S) being the aforementioned upper limit or less, excessive forming of crosslinking can be inhibited. In a part where the excessive crosslinking occurs, solubility in water decreases, thereby yielding insoluble matter. Such insoluble matter causes coating unevenness when the PVA is used as the aqueous solution, and preparation of the aqueous solution of a high concentration may be difficult. Thus, due to the moisture content (S) being the aforementioned upper limit or less, insoluble matter tends to decrease, whereby coating characteristics in the case of being prepared as the aqueous solution may improve. The percentage content of (S) can be determined by a $^1$H-NMR analysis of a vinyl ester polymer before saponification of the PVA of the present invention.

The PVA of the present invention has the minimum degree of branching of 0.93 or less, within a range of an absolute molecular weight being 200,000 or more and 800,000 or less. The degree of branching as referred to herein means a marker representing an extent of a branched structure(s) of a polymer, and provided that the degree of branching of a linear polymer, i.e., a polymer not having a branched structure, is 1, a value closer to 0 indicates many branched structure(s) being included. With respect to a PVA as a subject of the measurement, the degree of branching for each absolute molecular weight in the range of the absolute molecular weight being 200,000 or more and 800,000 or less is determined. Then, the smallest degree of branching in the above range is defined as the minimum degree of branching. It is to be noted that in a case in which the absolute molecular weight of a PVA does not distribute over the entire range of 200,000 or more and 800,000 or less, for example, also in a case of including only a PVA having an absolute molecular weight of 600,000 or less, or the like, the smallest degree of branching in the range of the absolute molecular weight being 200,000 or more and 600,000 or less is defined as the minimum degree of branching. In other words, although the PVA of the present invention consisting of a plurality of molecules includes molecules having an absolute molecular weight falling within the range of 200,000 or more and 800,000 or less, the absolute molecular weight may not be distributed over the entire range of 200,000 or more and 800,000 or less.

The degree of branching $g_m$ in each absolute molecular weight of the PVA of the present invention is determined with the following equalities (1) and (2).

$$g_m{'} = [\eta]_{branch}/[\eta]_{linear} \qquad (1)$$

$$g_m = g_m{'}^{(1/\varepsilon)} \qquad (2)$$

In the equality (1), $[\eta]_{branch}$ represents an intrinsic viscosity of the PVA of the present invention with a branched structure (branched PVA), having an absolute molecular weight x (wherein x is 200,000 or more and 800,000 or less), and is a value calculated from a differential refractive index detector, a light scattering detector, and a viscosity detector. $[\eta]_{linear}$ is an intrinsic viscosity of the linear PVA having the above absolute molecular weight x, and is similarly a value calculated from a differential refractive index detector, a light scattering detector, and a viscosity detector. It is to be noted that as the linear PVA, an unmodified PVA (a saponification product of a homopolymer of vinyl acetate) is used, a viscosity of a 4% by mass aqueous solution of which accounts for within $\pm 20\%$ of the viscosity of a 4% by mass aqueous solution of the PVA of the present invention to be a subject of the measurement, and a degree of saponification of which accounts for within $\pm 3$ mol% of the PVA of the present invention. The intrinsic viscosity of the PVA of the present invention and the linear PVA having each absolute molecular weight can be measured specifically, by a method described in Examples. A relationship between the degree of branching $g_m$ and the ratio $g_m{'}$ of the intrinsic viscosity represented by the above equality (1) is as represented by the above equality (2). In the equality (2), $\varepsilon$ represents a structure factor, wherein $\varepsilon$ is 0.7.

In the PVA of the present invention, the minimum degree of branching is 0.93 or less, whereby a sufficient branched structure (crosslinking) has been formed. Thus, according to the PVA of the present invention, an increase in viscosity in a case of preparing an aqueous solution of a high concentration can be inhibited. In order to enhance such an effect, the upper limit of the minimum degree of branching is preferably 0.8 and more preferably 0.6, and may be still more preferably 0.4, 0.25 or 0.18.

On the other hand, the lower limit of the minimum degree of branching may be, for example, 0.01 or 0.05, may be preferably 0.11, and may be still more preferably 0.20. Due to the minimum degree of branching being the aforementioned lower limit or more, insoluble matter generated through excessive forming of crosslinking and/or the like can decrease, whereby coating characteristics and the like can be improved when prepared into an aqueous solution.

The branching in the PVA is presumed to be formed by a heat treatment through, for example formation of an ester bond between the hydroxy group and the carboxy group included in the PVA, and the like. Thus, the minimum degree of branching can be adjusted by: heat treatment conditions such as a heat treatment temperature and a heat treatment time period; the percentage content of the structural unit derived from the monomer (a); the degree of saponification; and the like.

The PVA of the present invention includes the PVA having an absolute molecular weight within the range of 200,000 or more and 800,000 or less. In addition, the PVA of the present invention includes preferably the PVA having an absolute molecular weight being 200,000, and the having an absolute molecular weight being 800,000, and it is more preferred that the absolute molecular weight is distributed over the entire range of at least 200,000 or more and 800,000 or less.

The upper limit of the viscosity-average degree of polymerization (P) of the PVA of the present invention is typically 750, preferably 700, more preferably 600, and still more preferably 500. In a case in which the viscosity-average degree of polymerization (P) exceeds 750, the effect that an increase in viscosity when prepared into an aqueous solution of a high concentration can be inhibited may not be exerted, and the viscosity tends to be higher than that of the unmodified PVA, to the contrary. The lower limit of the viscosity-average degree of polymerization (P) may be, for example, 100, or may be 150 or 200. The viscosity-average degree of polymerization (P) is a value measured in accordance with JIS K6726: 1994, and specifically, can be determined by a method described in EXAMPLES.

The lower limit of a percentage content of the vinyl alcohol unit with respect to total structural units in the PVA of the present invention is preferably 65 mol% and more preferably 70 mol%, and may be still more preferably 80 mol% or 85 mol%. On the other hand, the upper limit of the percentage content of the vinyl alcohol unit is preferably 99.9 mol%, and more preferably 99 mol%.

The lower limit of the degree of saponification of the PVA of the present invention is typically 65 mol%, preferably 80 mol%, and more preferably 85 mol%. When the degree of saponification is the aforementioned lower limit or more, water solubility is enhanced and insoluble matter decreases, whereby a homogenous aqueous PVA solution having a high concentration can be more easily prepared. On the other hand, the upper limit of the degree of saponification may be 100 mol%, and is preferably 99.9 mol%, more preferably 99 mol%, and still more preferably 92 mol%. When the degree of saponification is the aforementioned upper limit or less, a sufficient branched structure tends to be more readily formed by the heat treatment.

The degree of saponification is a value measured by a method described in JIS K6726: 1994.

The PVA of the present invention preferably satisfies the following inequality (I).

$$S \times P > 250 \qquad (I)$$

In the inequality (I), S represents a percentage content of (mol%) of the structural unit derived from the monomer (a) with respect to total structural units; and P represents the viscosity-average degree of polymerization.

In the case in which the inequality (I) is satisfied, an extent of effects resulting from modification with the carboxylic acid (formation of a branched structure, and the like), and an extent of effects resulting from the degree of polymerization may be balanced, whereby coating characteristics and the like may be further improved. Specifically, in the case in which, for example, the inequality (I) is satisfied, coating unevenness upon applying may be further inhibited and strength of a coating film to be obtained tends to be enhanced. The lower limit of "$S \times P$" is more preferably 300, and may be still more preferably 400, 500, 600 or 700. On the other hand, the upper limit of "$S \times P$" is preferably 4,000, more preferably 3,000, and still more preferably 2,000.

In regard to the degree of branching, the PVA of the present invention preferably satisfies the following inequality (II).

$$1.0 < g_A/g_B < 9.0 \qquad (II)$$

In the inequality (II), $g_A$ represents a degree of branching of the vinyl alcohol polymer having an absolute molecular weight of 200,000 (a degree of branching of PVA having an absolute molecular weight of 200,000, of the PVA of the present invention); and $g_B$ represents a degree of branching of the vinyl alcohol polymer having an absolute molecular weight of 800,000 (a degree of branching of PVA having an absolute molecular weight of 800,000, of the PVA of the present invention).

As described above, crosslinking proceeds by way of a sufficient heat treatment, whereby PVA having a minimum degree of branching being small can be obtained. However, if the degree of crosslinking is accompanied by nonuniformity due to the difference in the molecular weight, PVA (in general, a component having a molecular weight being large) in which crosslinking excessively occurs is likely to be insoluble in water, and affects water solubility of the PVA, coating characteristics of an aqueous solution of the PVA, and the like. Further, when the nonuniformity of crosslinking is great due to the difference in the molecular weight, the ratio $g_A/g_B$ in the inequality (II) becomes greater. From this point of view, the ratio $g_A/g_B$ is more preferably less than 7.0, still more preferably less than 6.0, and may be yet more preferably less than 5.0, less than 4.0, less than 3.5, or less than 3.0.

An insoluble content of a mixture prepared by adding 4 parts by mass of the PVA of the present invention to 96 parts by mass of water followed by stirring at 60 °C for 1 hour is preferably 0.1 ppm or more and less than 2,000 ppm. The insoluble content may be more preferably less than 1,500 ppm, and may be still more preferably less than 1,000 ppm. When the insoluble content is thus low, coating characteristics of the aqueous solution of the PVA, and the like can be improved. On the other hand, the insoluble content may be 1 ppm or more, or may be 10 ppm or more or 100 ppm or more. It is to be noted that the "ppm" is on mass basis, and the insoluble content (ppm) indicates the proportion of the insoluble matter contained in the PVA. The insoluble content, specifically, can be determined by a method described in Examples.

The value of the ratio $g_A/g_B$, and the content of the insoluble matter tend to increase as a proportion of the PVA, in which excessive crosslinking has occurred through being excessively heated, increases. Thus, as described later, the ratio $g_A/g_B$ and the proportion of the insoluble matter contained can be lowered by: upon subjecting the saponification product of the vinyl ester polymer (copolymer) to a heat treatment, fine powder which is likely to be excessively heated is eliminated beforehand; carrying out the heat treatment while eliminating the fine powder; eliminating the fine powder after the heat treatment; and/or the like.

The PVA of the present invention may include other structural unit(s) aside from: the vinyl alcohol unit; a vinyl ester unit; and the structural unit derived from the monomer (a). Examples of monomers that give the other structural unit include: $\alpha$-olefins such as ethylene, propylene, 1-butene, isobutene, and 1-hexene; acrylamide derivatives such as N-methylacrylamide, N-ethylacrylamide, and 2-acrylamide-2-methylpropane sulfonate; methacrylamide derivatives such as N-methylmethacrylamide and N-ethylmethacrylamide; vinyl ethers such as methyl vinyl ether, ethyl vinyl ether, n-propyl vinyl ether, isopropyl vinyl ether, and n-butyl vinyl ether; hydroxy group-containing vinyl ethers such as ethylene glycol vinyl ether, 1,3-propanediol vinyl ether, and 1,4-butanediol vinyl ether; allyl acetate; 3,4-diacetoxy-1-butene; allyl ethers such as propyl allyl ether, butyl allyl ether, and hexyl allyl ether; monomers each having an oxyalkylene group; hydroxy group-containing $\alpha$-olefins such as 3-buten-1-ol, 4-penten-1-ol, 5-hexen-1-ol, 7-octen-1-ol, 9-decen-1-ol, and 3-methyl-3-buten-1-ol; monomers each having a silyl group such as vinyltrimethoxysilane, vinylmethyldimethoxysilane, vinyldimethylmethoxysilane, vinyltriethoxysilane, vinylmethyldiethoxysilane, vinyldimethylethoxysilane, 3-(meth)acrylamidepropyltrimethoxysilane, and 3-(meth)acrylamidepropyltriethoxysilane; and the like.

A percentage content of the other structural unit with respect to total structural units of the PVA of the present invention may be preferably 20 mol% or less, and may be still more preferably 10 mol% or less, or even more preferably 3 mol% or less, 1 mol% or less, or 0.1 mol% or less. On the other hand, the percentage content of the other structural unit may be, for example, 0.1 mol% or more, or may be 1 mol% or more.

The PVA of the present invention may not have an aliphatic hydrocarbon group having 12 carbon atoms at an end thereof, or may not have an aliphatic hydrocarbon group having 6 or more and 18 or less carbon atoms at an end thereof. Such a terminal aliphatic hydrocarbon group can be introduced by, for example, a chain transfer agent having an aliphatic hydrocarbon group having 6 or more and 18 or less carbon atoms. The chain transfer agent is exemplified by an alkyl thiol having 6 or more and 18 or less carbon atoms such as n-dodecanethiol.

Powder

The powder of the present invention is a powder containing the PVA of the present invention. Since the powder contains the PVA of the present invention, even in the case in which the PVA is dissolved in water such that a high concentration is attained, an increase in viscosity of the aqueous solution can be inhibited.

In the powder of the present invention, the PVA of the present invention is typically contained as a principal component. The principal component as referred to herein means a component having the highest content on a mass basis. The lower limit of a content of the PVA of the present invention with respect to nonvolatile components of the powder of the present invention is preferably 50% by mass, more preferably 70% by mass, and still more preferably 90% by mass, and may be even more preferably 99% by mass. The upper limit of a content of the PVA of the present invention with respect to nonvolatile components of the powder of the present invention may be 100% by mass. The nonvolatile component(s) other than the PVA of the present invention which may be included in the powder of the present invention is/are exemplified by: a PVA other than the PVA of the present invention; a resin other than PVAs; an additive such as a surfactant and a plasticizer; each compound used in production; and the like. In addition, a content of volatile components in the powder of the present invention is typically 20% by mass or less, preferably 15% by mass or less, and more preferably 10% by mass or less. The volatile component(s) which may be included in the powder of the present invention is/are exemplified by an alcohol, water, and the like. The powder of the present invention may be the powder of the PVA of the present invention.

In the powder of the present invention, the upper limit of a percentage content of the powder (fine powder) capable of passing through a sieve having a mesh opening size of 180 $\mu$m is preferably 12% by mass, and may be more preferably 10% by mass, 8% by mass, or 5% by mass. As described above, the fine powder is likely to be excessively heated by the heat treatment, leading to crosslinking proceeding too much, whereby insoluble matter is likely to be generated. Therefore, when the percentage content of the powder capable of passing through a sieve having a mesh opening size of 180 $\mu$m is the aforementioned upper limit or less, the insoluble matter decreases, whereby coating characteristics and the like in the case of being prepared as the aqueous solution may improve. It is to be noted that the lower limit of a percentage content of the powder capable of passing through a sieve having a mesh opening size of 180 $\mu$m may be 0.1% by mass, or may be 1% by mass. The mesh opening size of the sieve conforms to nominal mesh opening size W in accordance with JIS Z 8801-1-2006 (the same applying to the following description).

In the powder of the present invention, it is preferred that a percentage content of the powder capable of passing through a sieve having a mesh opening size of 1.00 mm is 97% by mass or more, and a percentage content of the powder capable of passing through a sieve having a mesh opening size of 500 $\mu$m is 40% by mass or more. The lower limit of the percentage content of the powder capable of passing through a sieve having a mesh opening size of 1.00 mm is more preferably 98% by mass, and still more preferably 99% by mass. On the other hand, the upper limit of the percentage content of the powder capable of passing through a sieve having a mesh opening size of 1.00 mm may be 100% by mass, or may be 99.9% by mass. The upper limit of the percentage content of the powder capable of passing through a sieve having a mesh opening size of 500 μm may be 70% by mass, or may be 60% by mass. In the case in which the powder of the present invention has such a size, water-soluble and coating characteristics in the case of being prepared as the aqueous solution, and the like may improve due to a lower amount of coarse powder, uniformity of the particle diameter being superior, and the like.

Particle size distribution in the powder of the present invention can be adjusted by sieving during or after production, and the like.

An insoluble content of a mixture prepared by adding 4 parts by mass of the powder of the present invention to 96 parts by mass of water followed by stirring at 60 °C for 1 hour is preferably 0.1 ppm or more and less than 2,000 ppm. The insoluble content may be more preferably less than 1,500 ppm, and may be still more preferably less than 1,000 ppm. When the insoluble content is thus low, coating characteristics of the aqueous solution obtained from the powder of the present invention, and the like can be improved. On the other hand, the insoluble content may be 1 ppm or more, or may be 10 ppm or more or 100 ppm or more. Measurement of insoluble content of the powder can be conducted similarly to the measurement of the insoluble content of the PVA.

Intended Usages of PVA and Powder

The PVA and the powder of the present invention can be used for a variety of intended usages, which are similar to those of conventional PVAs and powders. These intended usages are exemplified below, but are not limited thereto.

(1) Vinyl chloride dispersant usages: dispersion stabilizers and dispersion aids for suspension polymerization of vinyl chloride or vinylidene chloride

(2) Coating material usages: sizing agents, fiber processing agents, leather finishers, paints, anti-fogging agents, metal corrosion inhibitors, gloss agents for galvanized material, and antistatic agents

(3) Adhesive/binder usages: adhesives, agglutinants, remoistenable adhesives, various binders, and additives for cements, mortars, etc.

(4) Agricultural usages: binders for pesticides, spreaders for pesticides, agricultural coating materials, soil improving agents, erosion inhibitors, and dispersants for pesticides

(5) Medical/cosmetic usages: granulate binders, coating agents, emulsifying agents, skin patches, binding agents, bases for film formulations, and film-forming agents

(6) Viscosity adjusting agent usages: thickening agents

(7) Aggregating agent usages: agents for aggregating solids suspended in water and for dissolved matter, and metal aggregating agents

(8) Film usages: water-soluble films, polarized films, barrier films, films for wrapping textile products, seed germination sheets, vegetation sheets, seed tapes, and hygroscopic film

(9) Molded article usages: fibers, pipes, tubes, anti-leak films, water-soluble fibers for chemical laces, and sponges

(10) Usages as raw materials for resins: raw materials for polyvinyl butyral, raw materials for photosensitive resins, raw materials for graft polymers, and raw materials for various gels

(11) Post-reaction usages: post-reaction usages with low-molecular organic compounds, high-molecular organic compounds, and inorganic compounds

(12) Dispersants for emulsion polymerization: dispersants for emulsion polymerization of a vinyl acetate emulsion, and dispersants for emulsion polymerization of ethylene-vinyl acetate

(13) Paper processing agents: surface sizing agents for general paper, wood fillers for release paper, overcoating agents for thermal paper, and silica binders for ink jet paper

In the PVA and the powder of the present invention, an increase in viscosity in a case of preparing an aqueous solution of a high concentration is inhibited. Thus, these are particularly suitable for intended usages in which these are used in the form of an aqueous solution. Such intended usages are exemplified by adhesive, films (film-forming solutions), paper processing agents, dispersants for emulsion polymerization, and the like. More specifically, an aqueous solution including the PVA of the present invention, an adhesive including the PVA of the present invention, a film including the PVA of the present invention, a paper processing agent containing the PVA of the present invention, a dispersant for emulsion polymerization containing the PVA of the present invention, and the like also fall under suitable modes of the present invention. The content of the PVA of the present invention in the aqueous solution, the adhesive, the film-forming solution, and the like is, for example, 1% by mass or more and 30% by mass or less, may be 5% by mass or more and 20% by mass or less, or may be 10% by mass or more. In the aqueous solution, the adhesive, the film-forming solution, and the like, other component(s) aside from the PVA of the present invention and water may be further contained. Such other component(s) is/are exemplified by each component which may be contained in conventionally well-known adhesives, film-forming solutions, and the like.

Paper Processing Agent

The paper processing agent of the present invention contains the PVA of the present invention. The paper processing agent of the PVA of the present invention may be in the form of powder, or may be in the form of a liquid state such as an aqueous solution. The paper processing agent of the present invention may be a coating agent for paper. The paper processing agent may be similar to conventionally well-known paper processing agents except for the PVA of the present invention being used. The paper processing agent may further include other component(s) aside from the PVA of the present invention. The other component(s) is/are exemplified by a pigment, a dispersant, a plasticizer, a pH adjusting agent, a defoaming agent, a surfactant, a resin other than the PVA of the present invention, and the like.

Dispersant for Emulsion Polymerization

The dispersant for emulsion polymerization of the present invention contains the PVA of the present invention. The dispersant for emulsion polymerization of the present invention may be in the form of powder, or may be in the form of a liquid state such as an aqueous solution. The dispersant for emulsion polymerization may be similar to conventionally well-known dispersants for emulsion polymerization except for the PVA of the present invention being used. The dispersant for emulsion polymerization may further include other component(s) aside from the PVA of the present invention. The other component(s) is/are exemplified by a surfactant, a buffering agent, an agent for adjusting the degree of polymerization, a PVA other than the PVA of the present invention, and the like. The dispersant for emulsion polymerization is particularly suitably used as a dispersant for emulsion polymerization of an ethylenic unsaturated monomer.

Methods for Producing PVA and Powder

The method for producing the PVA or the powder of the present invention is not particularly limited, and the following method is preferred. More specifically, the method for producing the PVA or the powder of the present invention includes:

a step (1) of obtaining a copolymer of a vinyl ester with the monomer (a);
a step (2) of obtaining a saponification product of the copolymer; and
a step (3) of subjecting the saponification product to a heat treatment.

Step (1)

In the step (1), a copolymer of a vinyl ester with the monomer (a) is obtained. Specific examples and preferred examples of the monomer (a) are as described above. Examples of the vinyl ester monomer include vinyl formate, vinyl acetate, vinyl propionate, vinyl valerate, vinyl caprate, vinyl laurate, vinyl stearate, vinyl benzoate, vinyl pivalate, vinyl versatate, and the like. Of these, vinyl acetate is preferred.

The procedure of polymerization is exemplified by a well-known procedure such as a bulk polymerization procedure, a solution polymerization procedure, a suspension polymerization procedure, an emulsion polymerization procedure, and the like. Of these procedures, the bulk polymerization procedure performed without a solvent and the solution polymerization procedure performed with a solvent such as an alcohol or the like are preferred, and the solution polymerization procedure in which the polymerization is performed in the presence of a lower alcohol is more preferred. The lower alcohol is preferably an alcohol having 3 or fewer carbon atoms; more preferably methanol, ethanol, n-propanol, or isopropanol; and still more preferably methanol. In carrying out a polymerization reaction by the bulk polymerization procedure or the solution polymerization procedure, in terms of a reaction system, either of a batchwise system or a continuous system can be employed.

An initiator to be used in the polymerization reaction is exemplified by well-known initiators, e.g., azo initiators such as 2,2'-azobisisobutyronitrile, 2,2'-azobis(2,4-dimethylvaleronitrile), and 2,2'-azobis(4-methoxy-2,4-dimethylvaleronitrile); organic peroxide initiators such as benzoyl peroxide and n-propyl peroxycarbonate; and the like. A polymerization temperature at a time of conducting the polymerization reaction is not particularly limited, and a range of 5 °C or higher and 200 °C or lower is appropriate.

In copolymerizing the vinyl ester with the monomer (a), copolymerizable monomer(s) can be further copolymerized within a range not impairing the principles of the present invention. Specific examples of such other monomer(s) are as described above, in terms of the monomer that gives the other structural unit.

In the copolymerization, a chain transfer agent may also be present for the purpose of adjusting the degree of polymerization of the resulting PVA, and the like. Examples of the chain transfer agent include: aldehydes such as acetaldehyde, propionaldehyde, butyraldehyde, and benzaldehyde; ketones such as acetone, methyl ethyl ketone, hexanone, and cyclohexanone; mercaptans such as 2-hydroxyethanethiol and 3-mercaptopropionic acid; thiocarboxylic acids such as thioacetic acid; halogenated hydrocarbons such as trichloroethylene and perchloroethylene; and the like. Of these, the aldehydes and the ketones are particularly suitably used. An amount of the chain transfer agent to be added is determined according to the chain transfer constant of the chain transfer agent to be added and the target degree of polymerization of the PVA. Typically, the amount is preferably 0.1 to 10% by mass with respect to the vinyl ester to be used.

Step (2)

In the step (2), the copolymer (vinyl ester polymer) obtained in the step (1) is saponified in a solution using an alkali catalyst or an acid catalyst to give the saponification product. For the saponification reaction, an alcoholysis or hydrolysis reaction using a conventionally well-known basic catalyst such as sodium hydroxide, potassium hydroxide, or sodium methoxide, or an acid catalyst such as p-toluenesulfonic acid can be adopted. Examples of the solvent to be used in the saponification reaction include: alcohols such as methanol and ethanol; esters such as methyl acetate and ethyl acetate; ketones such as acetone and methyl ethyl ketone; aromatic hydrocarbons such as benzene and toluene; and the like. These can be used alone, or in a combination of two or more types thereof. Of these, due to convenience, it is preferable to use methanol or a mixed solution of methanol and methyl acetate as the solvent, and to conduct the saponification reaction in the presence of sodium hydroxide, which serves as the basic catalyst.

The saponification reaction can be conducted using a belt type reactor, a kneader type reactor, a tower type reactor, or the like. A temperature at which saponification is conducted is not particularly limited, and is preferably 20 °C or more and 60 °C or less. In a case in which a gelatinous product emerges to deposit as the saponification proceeds, it is preferred that the product is pulverized and the saponification is allowed to further proceed. Thereafter, a resultant solution is neutralized to terminate the saponification and washed, whereby a saponification product can be obtained. A procedure for the saponification is not limited to the procedure described above, and a well-known procedure can be employed.

Step (3)

In the step (3), the saponification product obtained after the step (2) is subjected to a heat treatment. The heat treatment is preferably carried out in an air atmosphere or a nitrogen atmosphere. The heat treatment is preferably carried out on the saponification product of a solid form, and more preferably a powder form (particulate form). The saponification product may be preliminarily dried, and the saponification product from which a certain level of volatile matter has been removed may be subjected to the heat treatment. The heat treatment may be carried out while stirring the saponification product. The heat treatment can be carried out by using, for example, a cylindrical agitating dryer, or the like.

In one mode of the method for producing the PVA or the powder of the present invention, the heat treatment is carried out with a heat treatment temperature of 110 °C or higher and a heat treatment time period of 1 hour or longer. By carrying out the heat treatment under such a condition, a sufficient crosslinking reaction is caused, whereby the PVA having a minimum degree of branching of 0.93 or less can be efficiently obtained. The lower limit of the heat treatment temperature may be 115 °C, or may be 120 °C. Further, the upper limit of the heat treatment temperature may be 150 °C, or may be 140 °C, 130 °C or 125 °C. The lower limit of the heat treatment time period is preferably 2 hrs, more preferably 3 hrs, still more preferably 4 hrs, and even more preferably 5 hrs. Further, the upper limit of the heat treatment time period may be 24 hrs, may be 12 hrs, or may be 8 hrs. When the heat treatment temperature and the heat treatment time period are each of the aforementioned upper limits or less, formation of excessive crosslinking may be inhibited, whereby insoluble matter in the PVA or the powder to be obtained can be decreased.

In one mode of the method for producing the powder of the present invention a percentage content of the powder capable of passing through a sieve having a mesh opening size of 180 μm is 12% by mass or less, in the saponification product upon completion of the step (3). The upper limit of the percentage content of the powder capable of passing through a sieve having a mesh opening size of 180 μm may be preferably 10% by mass, 8% by mass or 5% by mass. When the amount of the fine powder which is likely to be excessively heated is thus decreased, PVA powder in which formation of excessive crosslinking is inhibited, to include less insoluble matter can be efficiently obtained.

A procedure for adjusting the percentage content of the powder capable of passing through a sieve having a mesh opening size of 180 μm to be 12% by mass or less, in the saponification product upon completion of the step (3) is exemplified by: a procedure of screening the saponification product, followed by carrying out the heat treatment; a procedure of carrying out the heat treatment while eliminating the fine powder generated; and the like. For example, the heat treatment may be carried out multiple times, and the fine powder may be eliminated by sieving between each heat treatment. Alternatively, the fine powder may be eliminated after the heat treatment.

Between the step (2) and the step (3), a step of pulverizing the saponification product to give a particulate form, a step of screening the saponification product in the particulate form, and/or the like may be provided.

EXAMPLES

Hereinafter, the present invention is specifically explained by way of Examples, but the present invention is not in any way limited to these Examples. It is to be noted that in the following Examples and Comparative Examples, "part(s)" and "%" are on mass basis, unless otherwise specified particularly. Each measuring method adopted in the following Examples and Comparative Examples is indicated below.

Viscosity-Average Degree of Polymerization

The viscosity-average degree of polymerization of the PVA was determined according to JIS K6726: 1994. Specifically, the PVA was saponified until the degree of saponification became 99.5 mol% or more, and after being purified: in regard to the PVA including the structural unit derived from the monomer (a), a limiting viscosity$[\eta]$ (unit: liter/g) was measured in an aqueous sodium chloride solution (0.5 mol/L) at 30 °C; and in regard to the PVA not including the structural unit derived from the monomer (a), a limiting viscosity $[\eta]$ (unit: liter/g) was measured in an aqueous solution at 30 °C. From this limiting viscosity $[\eta]$, the viscosity-average degree of polymerization (P) of the PVA was determined according to the following equality.

$$P = ([\eta] \times 10^4/8.29)^{(1/0.62)}$$

Degree of Saponification

The degree of saponification of each PVA was determined according to a method described in JIS K6726: 1994.

Degree of Modification

The degree of modification of the PVA (a percentage content of the structural unit derived from the monomer (a) in the PVA) was determined according to a method employing $^1$H-NMR, using a vinyl ester polymer that is a precursor of the PVA.

For example, when monomethyl maleate is used as the monomer (a), the degree of modification may be determined according to the following procedure. More specifically, by using n-hexane/acetone as a solvent, the vinyl ester polymer that is the precursor of the PVA is reprecipitated and purified sufficiently at least three times, and thereafter the purified material thus obtained is dried at 70 °C for 1 day to produce a sample for analysis. The sample is dissolved in $CDCl_3$, and the measurement is carried out with $^1$H-NMR at room temperature. The degree of modification (the percentage content S of the structural unit derived from the monomer (a)) can be calculated from a peak $\alpha$ (4.7 to 5.2 ppm) derived from a methine structure of the vinyl ester unit in the vinyl ester polymer, and a peak $\beta$ (3.6 to 3.8 ppm) derived from the methyl group of the methyl ester moiety of the structural unit derived from the monomer (a), according to the following equation:

$$S \text{ (mol\%)} = \{(\text{number of protons of } \beta/ 3)/ (\text{number of proton of } \alpha + (\text{number of proton of } \beta/ 3))\} \times 100.$$

Degree of Branching

First, with hexafluoroisopropanol as a mobile phase, gel permeation chromatography (GPC) measurement was performed by using a differential refractive index detector, a light scattering detector, and a viscosity detector to determine intrinsic viscosity on each absolute molecular weight of 200,000 or more and 800,000 or less of: the PVA (branched PVA) as a subject of the measurement; and the linear PVA that serves as a corresponding standard. It is to be noted that the linear PVA used was an unmodified PVA having a viscosity of a 4% by mass aqueous solution falling within ±20%, and a degree of saponification falling within ±3 mol%, of the PVA as the subject of the measurement.

Specific measurement conditions of GPC are as shown below.

solvent: hexafluoroisopropanol (containing sodium trifluoroacetate at a concentration of 20 mmol/L)
column: Shodex, FIP-806M × 2, and HFIP-LG × 1

column temperature: 40 °C
flow rate: 1.0 mL/min
sample concentration: 0.1 mass/vol%
amount of injection: 100 μL
authentic sample:

for relative molecular weight: polymethyl methacrylate
for absolute molecular weight: polymethyl methacrylate

Using the intrinsic viscosity$[\eta]_{branch}$ of the PVA as the subject of the measurement and the intrinsic viscosity$[\eta]_{linear}$ of the linear PVA, on each absolute molecular weight measured, the degree of branching $g_m$ on each absolute molecular weight was determined according to the above equalities (1) and (2). The smallest degree of branching $g_m$ in the range of the absolute molecular weight of 200,000 or more and 800,000 or less was defined as the minimum degree of branching. In addition, the ratio $g_A/g_B$ of the degree of branching of the vinyl alcohol polymer having an absolute molecular weight of 200,000 $g_A$ to the degree of branching of the vinyl alcohol polymer having an absolute molecular weight of 800,000 $g_B$ was determined.

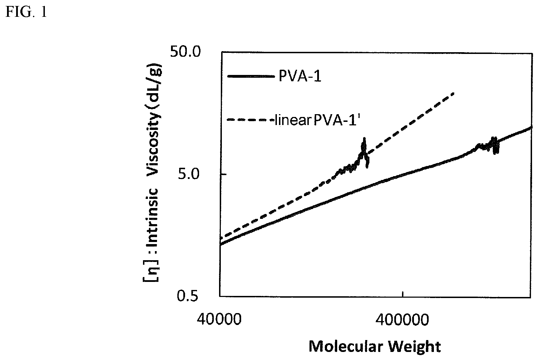

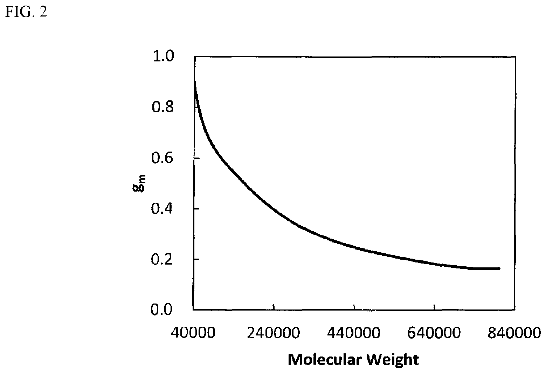

As one example of the measurement results, the result of PVA-1 is shown in FIGs. 1 and 2. FIG. 1 is a graph (Mark-Houwink plot) in which the absolute molecular weight and the intrinsic viscosity ($[\eta]_{branch}$ or $[\eta]_{linear}$) of: PVA-1 as the subject of the measurement; and PVA-1' that is a corresponding linear PVA are plotted. PVA-1' is an unmodified PVA having a 4% aqueous solution viscosity of 9.2 mPa·s, and a degree of saponification of 88 mol%. FIG. 2 is a graph in which the degree of branching $g_m$ on each absolute molecular weight of PVA-1 determined according the above equalities (1) and (2), based on the results shown in FIG. 1 as described above is plotted.

Particle Size Distribution

Particle size distribution of PVA powder was measured by a dry sieve procedure disclosed in JIS Z8815: 1994. Using each sieve having a mesh opening size of 1.00 mm, 500 μm, or 180 μm: a proportion of the mass (percentage content: % by mass) of the powder capable of passing through a sieve having a mesh opening size of 1.00 mm; a proportion of the mass (percentage content: % by mass) of the powder capable of passing through a sieve having a mesh opening size of 500 μm, and a proportion of the mass (percentage content: % by mass) of the powder capable of passing through a sieve having a mesh opening size of 180 μm, with respect to the mass of the PVA powder before being sieved were determined, respectively. It is to be noted that the mesh opening size conforms to nominal mesh opening size W in accordance with JIS Z8801-1-2006.

Insoluble Matter

In a water bath preset at 60 °C, a 500 mL flask attached with a stirrer was provided, and 288 g of distilled water was charged into this flask and stirring was started at 300 rpm. 12 g of the PVA powder was weighed and this PVA powder was gradually charged into the flask. The PVA powder was charged in the total amount (12 g), and the stirring was continued for 60 min to give a PVA solution. Thereafter, using the PVA solution thus obtained, particles (undissolved particles) remaining without being dissolved were filtered with a metal filter having a mesh opening size of 63 μm. Then, the filter was sufficiently washed with warm water at 30 °C, and the solution attached to the filter was removed to leave only the undissolved particles on the filter. Thereafter, the filter was dried by a heating dryer at 120 °C for 1 hour. The mass of the filter after drying was compared with the mass of the filter before being used in filtration, whereby the mass of the undissolved particles was calculated. The mass of the undissolved particles with respect to the PVA powder (12 g) used was employed for the proportion (ppm) of the insoluble matter contained.

Aqueous Solution Viscosity

An aqueous PVA solution was prepared, and a viscosity (mPa·s) was measured by using a B-type viscometer (rotation speed of the rotor: 12 rpm, temperature: 20 °C). A procedure of preparing the aqueous PVA solution was as in the following. 90 parts by mass of water were added to 10 parts by mass of the PVA and the temperature of a resultant mixture was elevated to 90 °C with stirring, followed by cooling after 1 hour. In addition, an unmodified PVA, being the same as the unmodified PVA used in GPC measurement for determining the degree of branching, was selected as an unmodified PVA that serves as a standard. The unmodified PVA was similarly subjected to the viscosity measurement. A viscosity ratio of these (the viscosity of the unmodified PVA serving as a standard/ the PVA of Example or Comparative Example) was calculated. In a case in which the viscosity ratio is more than 1.0, inhibition of an increase in viscosity was assessed, and in a case in which the viscosity ratio is more than 1.2, particularly sufficient inhibition of an increase in viscosity was assessed.

Example 1: Production of PVA-1

Into a reactor equipped with a stirrer, a reflux condenser, a nitrogen inlet tube, a comonomer dripping port and a polymerization initiator addition port, 700 parts by mass of vinyl acetate and 1,050 parts by mass of methanol were charged, and nitrogen substitution in the system was carried out for 30 min while bubbling nitrogen. Further, monomethyl maleate was used as the monomer (a), and nitrogen substitution in a methanol solution of monomethyl maleate (concentration: 10%) was carried out by bubbling nitrogen gas. Elevation of the temperature in the reactor was started, and when the internal temperature became 60 °C, 0.84 parts by mass of 2,2'-azobisisobutyronitrile (AIBN) were added thereto to start the polymerization. To the reactor was added the methanol solution of monomethyl maleate dropwise, and the polymerization was allowed at 60 °C for 5 hours while the monomer composition ratio in the polymerization solution was maintained to be constant. Thereafter, the mixture was cooled to stop the polymerization. The total amount of the monomer (a) added until the polymerization was stopped was 12.1 parts by mass, and the solid content concentration when the polymerization was stopped was 23.6%, with the rate of polymerization being 60%. Subsequently, unreacted monomers were removed while adding methanol at intervals at 30 °C under a reduced pressure to obtain a methanol solution of the vinyl ester polymer (concentration: 36.7%). Next, to 569.2 parts by mass of the methanol solution of the vinyl ester polymer (the polymer in the solution: 150.0 parts by mass) prepared by further adding methanol to this methanol solution, 26.0 parts by mass of a 10% methanol solution of sodium hydroxide and water were added such that the moisture content in the system became 1%, and saponification was allowed at 40 °C (the polymer concentration of the saponification solution: 25%; the molar ratio of sodium hydroxide to the vinyl acetate unit in the polymer: 0.009; and the moisture content: 1%). Since a gelatinous material was produced in about 10 min after the addition of the methanol solution of sodium hydroxide, this gelatinous matter was ground with a grinder and further left to stand at 40 °C for 1 hour to allow the saponification to proceed, and thereafter 600 parts by mass of methyl acetate were added to neutralize remaining alkali. After completion of neutralization was ascertained by using a phenolphthalein indicator, the mixture was filtered off to obtain a white solid. To this white solid were added 600 parts by mass of methanol, and the mixture was left to stand at 40 °C for 30 min to permit washing. After the washing operation was performed twice, a white solid obtained by deliquoring through centrifugation was subjected to preliminary drying overnight. Thereafter, while the fine powder was eliminated, a heat treatment was carried out at 120 °C for 6 hours with a dryer to give PVA (PVA-1) powder. Physical properties and the results of the evaluations of PVA-1 are shown in Table 2.

Examples 2 to 7 and Comparative Examples 1 to 5: Production of PVA-2 to PVA-12

Each PVA (PVA-2 to PVA-12) powder of Examples 2 to 7 and Comparative Examples 1 to 5 was obtained by a method similar to that in Example 1 except that: polymerization conditions such as the amount of vinyl acetate and methanol used, and the type and the amount of the monomer (a) used; saponification conditions such as the concentration of the vinyl ester polymer and the molar ratio of sodium hydroxide to the vinyl acetate unit in the saponification; and the heat treatment conditions were each changed as shown in Table 1. Physical properties and the results of the evaluations of these PVAs are shown in Table 2.

Comparative Example 6: Production of PVA-13

Into a reactor equipped with a stirrer, a reflux condenser, a nitrogen inlet tube, and a polymerization initiator addition port, 700 parts by mass of vinyl acetate and 1,050 parts by mass of methanol were charged, and nitrogen substitution in the system was carried out for 30 min while bubbling nitrogen. Elevation of the temperature in the reactor was started, and when the internal temperature became 60 °C, 0.84 parts by mass of 2,2'-azobisisobutyronitrile (AIBN) were added thereto to start the polymerization. The polymerization was allowed at 60 °C for 3 hours, and thereafter, the mixture was cooled to stop the polymerization. The solid content concentration when the polymerization was stopped was 24.0%, with the rate of polymerization being 60%. Subsequently, unreacted monomers were removed while adding methanol at intervals at 30 °C under a reduced pressure to obtain a methanol solution of the vinyl ester polymer (concentration: 36.7%). Next, to 569.2 parts by mass of the methanol solution of the vinyl ester polymer (the polymer in the solution: 150.0 parts by mass) prepared by further adding methanol to this methanol solution, 26.0 parts by mass of a 10% methanol solution of sodium hydroxide and water were added such that the moisture content in the system became 1%, and saponification was allowed at 40 °C (the polymer concentration of the saponification solution: 25%; the molar ratio of sodium hydroxide to the vinyl acetate unit in the polymer: 0.009; and the moisture content: 1%). Since a gelatinous material was produced in about 10 min after the addition of the methanol solution of sodium hydroxide, this gelatinous matter was ground with a grinder and further left to stand at 40 °C for 1 hour to allow the saponification to proceed, and thereafter 600 parts by mass of methyl acetate were added to neutralize remaining alkali. After completion of neutralization was ascertained by using a phenolphthalein indicator, the mixture was filtered off to obtain a white solid. To this white solid were added 600 parts by mass of methanol, and the mixture was left to stand at 40 °C for 30 min to permit washing. After the washing operation was performed twice, a white solid obtained by deliquoring through centrifugation was subjected to preliminary drying overnight. Thereafter, while the fine powder was eliminated, a heat treatment was carried out at 120 °C for 6 hours with a dryer to give PVA (PVA-13) powder. Physical properties and the results of the evaluations of PVA-13 are shown in Table 2.

In addition, each unmodified PVA (linear PVA), corresponding to each PVA (PVA-1 to PVA-13) produced, which serves as a standard for measurement of the degree of branching and for evaluation of the aqueous solution viscosity, was produced according to the method for production in Comparative Example 6 above. It should be noted that the unmodified PVA was not subjected to the heat treatment after preliminary drying.

Table 1

| | | Usage amount | | | | AIBN (parts by mass) | Rate of polymeri-zation (%) | Saponification conditions | | | Heat treatment conditions | |
|---|---|---|---|---|---|---|---|---|---|---|---|---|
| | | vinyl acetate (parts by mass) | methanol (parts by mass) | monomer (a) | | | | vinyl ester poly-mer concentra-tion (%) | NaOH molar ra-tio | moisture content (%) | temperature (°C) | time period (hrs) |
| | | | | type | using amount (parts by mass) | | | | | | | |
| Example 1 | PVA-1 | 700 | 1,050 | monomethyl maleate | 12.1 | 0.84 | 60 | 25 | 0.009 | 1 | 120 | 6 |
| Example 2 | PVA-2 | 300 | 1,400 | monomethyl maleate | 12.6 | 0.50 | 50 | 30 | 0.010 | 1 | 120 | 4.5 |
| Example 3 | PVA-3 | 700 | 1,050 | monomethyl maleate | 12.1 | 0.84 | 60 | 25 | 0.006 | 1 | 120 | 6 |
| Example 4 | PVA-4 | 700 | 1,050 | monomethyl maleate | 12.1 | 0.84 | 60 | 25 | 0.020 | 1 | 120 | 6 |
| Example 5 | PVA-5 | 700 | 1,050 | monomethyl maleate | 20.7 | 1.20 | 60 | 25 | 0.009 | 1 | 120 | 6 |
| Example 6 | PVA-6 | 700 | 1,050 | dimethyl maleate | 12.1 | 0.84 | 60 | 25 | 0.009 | 1 | 120 | 6 |
| Example 7 | PVA-7 | 700 | 1,050 | monomethyl fumarate | 12.1 | 0.84 | 60 | 25 | 0.009 | 1 | 120 | 6 |
| Comparative Example 1 | PVA-8 | 920 | 80 | monomethyl maleate | 0.6 | 0.25 | 25 | 20 | 0.010 | 1 | 120 | 4.5 |
| Comparative Example 2 | PVA-9 | 900 | 300 | monomethyl maleate | 6.8 | 0.05 | 25 | 20 | 0.010 | 1 | 120 | 6 |
| Comparative Example 3 | PVA-10 | 880 | 720 | monomethyl maleate | 11.1 | 0.90 | 65 | 25 | 0.008 | 1 | 120 | 6 |
| Comparative Example 4 | PVA-11 | 700 | 1,050 | monomethyl maleate | 12.1 | 0.84 | 60 | 25 | 0.006 | 1 | 120 | 6 |
| Comparative Example 5 | PVA-12 | 700 | 1,050 | monomethyl maleate | 12.1 | 0.84 | 60 | 25 | 0.009 | 1 | 105 | 6 |

EP 4 332 127 A1

| | | Usage amount | | | | | Rate of polymerization (%) | Saponification conditions | | | Heat treatment conditions | |
|---|---|---|---|---|---|---|---|---|---|---|---|---|
| | | vinyl acetate (parts by mass) | methanol (parts by mass) | monomer (a) | | AIBN (parts by mass) | | vinyl ester poly-mer concentra-tion (%) | NaOH molar ra-tio | moisture content (%) | temperature (°C) | time period (hrs) |
| | | | | type | using amount (parts by mass) | | | | | | | |
| Comparative Example 6 | PVA-13 | 700FK506 | 1,050 | - | 0.0 | 0.84 | 60 | 25 | 0.009 | 1 | 120 | 6 |

Table 2

| | | Viscosity-average degree of polymerization: P | Degree of modification: S (mol%) | S × P | Degree of saponification (mol%) | Minimum degree of branching | gA/gB | Particle size distribution | | | Insoluble matter (ppm) | 10% Aqueous solution viscosity ratio |
| --- | --- | --- | --- | --- | --- | --- | --- | --- | --- | --- | --- | --- |
| | | | | | | | | passage through sieve with mesh opening size 180 $\mu$m (% by mass) | passage through sieve with mesh opening size 1.00 mm (% by mass) | passage through sieve with mesh opening size 500 $\mu$m (% by mass) | | |
| Example 1 | PVA-1 | 420 | 1.9 | 798 | 88 | 0.22 | 2.59 | 3.4 | 99.6 | 45.0 | 700 | 1.3 |
| Example 2 | PVA-2 | 200 | 5.0 | 1000 | 88 | 0.10 | 4.20 | 3.5 | 99.4 | 43.1 | 1800 | 3.9 |
| Example 3 | PVA-3 | 420 | 2.0 | 840 | 80 | 0.11 | 3.31 | 6.9 | 99.7 | 50.1 | 950 | 2.9 |
| Example 4 | PVA-4 | 420 | 2.0 | 840 | 95 | 0.75 | 1.15 | 5.7 | 99.2 | 52.5 | 1000 | 1.1 |
| Example 5 | PVA-5 | 420 | 4.0 | 1680 | 88 | 0.10 | 5.10 | 10.3 | 99.3 | 47.3 | 1750 | 3.3 |
| Example 6 | PVA-6 | 420 | 1.9 | 798 | 88 | 0.15 | 3.60 | 3.4 | 99.6 | 44.9 | 1200 | 2.5 |
| Example 7 | PVA-7 | 420 | 1.9 | 798 | 88 | 0.36 | 2.71 | 3.4 | 99.1 | 45.5 | 530 | 1.3 |
| Comparative Example 1 | PVA-8 | 3,500 | 0.2 | 700 | 88 | 0.65 | 1.12 | 11.6 | 99.2 | 40.3 | 1100 | 0.6 |
| Comparative Example 2 | PVA-9 | 2,000 | 0.5 | 1000 | 88 | 0.72 | 1.33 | 7.8 | 99.2 | 56.2 | 870 | 0.8 |
| Comparative Example 3 | PVA-10 | 800 | 1.0 | 800 | 83 | 0.60 | 1.23 | 6.6 | 99.7 | 40.7 | 1600 | 0.9 |
| Comparative Example 4 | PVA-11 | 420 | 2.0 | 840 | 60 | -※[1] ※ | -[1] | 10.9※ | 99.4 | 44.1 | 10200 | -[1] |

(continued)

| gA/gB | passage through sieve with mesh opening size 180 μm (% by mass) | passage through sieve with mesh opening size 1.00 mm (% by mass) | passage through sieve with mesh opening size 500 μm (% by mass) | | | | | | | | | |
|---|---|---|---|---|---|---|---|---|---|---|---|---|
| Comparative Example 5 | PVA-12 | 420 | 2.0 | 840 | 88 | 0.98 | 1.01 | 10.2 | 99.1 | 47.8 | 300 | 1.0 |
| Comparative Example 6 | PVA-13 | 420 | 0 | 0 | 88 | -※2 | -※2 | 4.4 | 99.7 | 45.5 | 120 | 1.0 |

※1: In the PVA-11 of Comparative Example 4, since obtaining a homogenous aqueous solution failed, the degree of branching and the aqueous solution viscosity were not measured.

※2: In the unmodified PVA-13 of Comparative Example 6, since a branched structure is not substantially formed, the degree of branching was not measured.

As shown in Table 2, each PVA of Examples 1 to 7 revealed inhibition of an increase in viscosity in a case of preparing an aqueous solution of a high concentration. In particular, each PVA of Examples 1 and 7 was superior in not only a sufficient effect of inhibiting an increase in viscosity, but also in the insoluble matter being included in a small amount. These results are considered to be influences from: the minimum degree of branching falling within an adequate range; the ratio $g_A/g_B$ of the degree of branching being low; and the like.

On the other hand, each PVA of Comparative Examples 1 to 3 exhibited the degree of polymerization being high, and introduction of the branched structure resulted in further increased viscosity by contrast. In the PVA of Comparative Example 4, the degree of saponification was low and the crosslinking more readily proceeded by heat; therefore, thermal crosslinking sites increased, whereby obtaining a homogenous aqueous solution failed. The PVA of Comparative Example 4 failed to give a 10% by mass (high concentration) aqueous solution, and thus achieving the object of inhibiting an increase in viscosity in a case of preparing an aqueous solution of a high concentration was considered be impossible. Since the PVA of Comparative Example 5 was less branched, the effect of inhibiting increase in viscosity was not exhibited. Since the PVA of Comparative Example 6 did not include the structural unit derived from the monomer (a), and thus branching was not formed even after being subjected to the heat treatment, the effect of inhibiting increase in viscosity was not exhibited.

[INDUSTRIAL APPLICABILITY]

The PVA of the present invention can be used for various types of intended usages such as coating agents, adhesives, film materials, paper processing agents, and dispersants for emulsion polymerization.

**Claims**

1.    A vinyl alcohol polymer comprising a structural unit derived from at least one selected from the group consisting of: a monomer comprising a carboxy group; and a derivative of the monomer, wherein the vinyl alcohol polymer has:

    a minimum degree of branching of 0.93 or less within a range of an absolute molecular weight being 200,000 or more and 800,000 or less;
    a viscosity-average degree of polymerization of 750 or less; and
    a degree of saponification of 65 mol% or more.

2.    The vinyl alcohol polymer according to claim 1, wherein the at least one selected from the group consisting of: a monomer comprising a carboxy group; and a derivative of the monomer is at least one selected from the group consisting of an ethylenic unsaturated dicarboxylic acid, a monoester of an ethylenic unsaturated dicarboxylic acid, a diester of an ethylenic unsaturated dicarboxylic acid, and an anhydride of an ethylenic unsaturated dicarboxylic acid.

3.    The vinyl alcohol polymer according to claim 1, wherein the at least one selected from the group consisting of: a monomer comprising a carboxy group; and a derivative of the monomer is at least one selected from the group consisting of maleic acid, a maleic acid monoalkyl ester, a maleic acid dialkyl ester, maleic anhydride, fumaric acid, a fumaric acid monoalkyl ester, and a fumaric acid dialkyl ester.

4.    The vinyl alcohol polymer according to any one of claims 1 to 3, which satisfies the following inequality (I):

$$S \times P > 250 \qquad \text{(I)}$$

wherein, in the inequality (I),

    S represents a percentage content (mol%), with respect to total structural units, of the structural unit derived from at least one selected from the group consisting of: the monomer comprising a carboxy group; and the derivative of the monomer; and
    P represents the viscosity-average degree of polymerization.

5.    The vinyl alcohol polymer according to any one of claims 1 to 4, which satisfies the following inequality (II):

$$1.0 < g_A/g_B < 9.0 \qquad \text{(II)}$$

wherein, in the inequality (II),

$g_A$ represents a degree of branching of the vinyl alcohol polymer having an absolute molecular weight of 200,000; and

$g_B$ represents a degree of branching of the vinyl alcohol polymer having an absolute molecular weight of 800,000.

6. The vinyl alcohol polymer according to any one of claims 1 to 5, wherein an insoluble content of a mixture prepared by adding 4 parts by mass of the vinyl alcohol polymer to 96 parts by mass of water followed by stirring at 60 °C for 1 hour is 0.1 ppm or more and less than 2,000 ppm.

7. A powder comprising the vinyl alcohol polymer according to any one of claims 1 to 6.

8. The powder according to claim 7, wherein a percentage content of the powder capable of passing through a sieve having a mesh opening size of 180 $\mu$m is 12% by mass or less.

9. The powder according to claim 7 or 8, wherein

a percentage content of the powder capable of passing through a sieve having a mesh opening size of 1.00 mm is 97% by mass or more, and

a percentage content of the powder capable of passing through a sieve having a mesh opening size of 500 $\mu$m is 40% by mass or more.

10. A method for producing the vinyl alcohol polymer according to any one of claims 1 to 6, the method comprising:

a step (1) of obtaining a copolymer of a vinyl ester with at least one selected from the group consisting of: a monomer comprising a carboxy group; and a derivative of the monomer;

a step (2) of obtaining a saponification product of the copolymer; and

a step (3) of subjecting the saponification product to a heat treatment, wherein

in the step (3), a heat treatment temperature is 110 °C or more, and a heat treatment time period is 1 hour or more.

11. A method for producing the powder according to any one of claims 7 to 9, the method comprising:

a step (1) of obtaining a copolymer of a vinyl ester with at least one selected from the group consisting of: a monomer comprising a carboxy group; and a derivative of the monomer;

a step (2) of obtaining a saponification product of the copolymer; and

a step (3) of subjecting the saponification product to a heat treatment, wherein

in the saponification product upon completion of the step (3), a percentage content of the powder capable of passing through a sieve having a mesh opening size of 180 $\mu$m is 12% by mass or less.

12. A paper processing agent comprising the vinyl alcohol polymer according to any one of claims 1 to 6.

13. A dispersant for emulsion polymerization comprising the vinyl alcohol polymer according to any one of claims 1 to 6.

FIG. 1

FIG. 2

## INTERNATIONAL SEARCH REPORT

| International application No. |
|---|
| **PCT/JP2022/018783** |

### A. CLASSIFICATION OF SUBJECT MATTER

*C08F 8/12*(2006.01)i; *C08F 16/06*(2006.01)i
FI:  C08F8/12; C08F16/06

According to International Patent Classification (IPC) or to both national classification and IPC

### B. FIELDS SEARCHED

Minimum documentation searched (classification system followed by classification symbols)

C08F8/12; C08F16/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2007/119735 A1 (KURARAY CO., LTD.) 25 October 2007 (2007-10-25) claims, paragraph [0037], examples | 1-11 |
| X | WO 2009/011187 A1 (KURARAY CO., LTD.) 22 January 2009 (2009-01-22) claims, paragraph [0065], examples | 1-3, 5-11 |
| X | JP 2019-147855 A (KURARAY CO., LTD.) 05 September 2019 (2019-09-05) claims, paragraphs [0049], [0050], examples | 1-2, 4-12 |
| X | JP 2019-038935 A (KURARAY CO., LTD.) 14 March 2019 (2019-03-14) claims, paragraphs [0026], [0048], examples | 1-3, 5-13 |
| A | WO 2019/198764 A1 (KURARAY CO., LTD.) 17 October 2019 (2019-10-17) claims, examples (in particular, comparative example 3, etc.) | 1-13 |
| A | WO 2019/198754 A1 (KURARAY CO., LTD.) 17 October 2019 (2019-10-17) claims, examples (in particular, comparative example 3, etc.) | 1-13 |
| A | JP 2015-163659 A (KURARAY CO., LTD.) 10 September 2015 (2015-09-10) claims, examples | 1-13 |

☑ Further documents are listed in the continuation of Box C.   ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 July 2022** | **19 July 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| International application No. |
| --- |
| **PCT/JP2022/018783** |

### C.    DOCUMENTS CONSIDERED TO BE RELEVANT

| Category* | Citation of document, with indication, where appropriate, of the relevant passages | Relevant to claim No. |
| --- | --- | --- |
| A | JP 2019-105008 A (KURARAY CO., LTD.) 27 June 2019 (2019-06-27) claims, examples | 1-13 |
| A | JP 09-316272 A (KURARAY CO., LTD.) 09 December 1997 (1997-12-09) claims, examples | 1-13 |

Form PCT/ISA/210 (second sheet) (January 2015)

**INTERNATIONAL SEARCH REPORT**
**Information on patent family members**

International application No.

**PCT/JP2022/018783**

| Patent document cited in search report | | | Publication date (day/month/year) | Patent family member(s) | | | Publication date (day/month/year) |
|---|---|---|---|---|---|---|---|
| WO | 2007/119735 | A1 | 25 October 2007 | US claims, paragraph [0049], examples | 2009/0111940 | A1 | |
| | | | | EP | 2006307 | A1 | |
| | | | | CN | 101421309 | A | |
| | | | | KR | 10-2009-0018051 | A | |
| WO | 2009/011187 | A1 | 22 January 2009 | US claims, paragraphs [0072], examples | 2010/0184917 | A1 | |
| | | | | EP | 2177540 | A1 | |
| | | | | KR | 10-2010-0040930 | A | |
| | | | | CN | 101743259 | A | |
| JP | 2019-147855 | A | 05 September 2019 | (Family: none) | | | |
| JP | 2019-038935 | A | 14 March 2019 | (Family: none) | | | |
| WO | 2019/198764 | A1 | 17 October 2019 | TW | 201943743 | A | |
| WO | 2019/198754 | A1 | 17 October 2019 | US claims, examples (in particular, comparative example 3, etc.) | 2021/0163654 | A1 | |
| | | | | EP | 3778683 | A1 | |
| | | | | KR | 10-2020-0142047 | A | |
| | | | | CN | 112218902 | A | |
| JP | 2015-163659 | A | 10 September 2015 | US claims, examples | 2016/0251466 | A1 | |
| | | | | EP | 3045480 | A1 | |
| | | | | CN | 105531292 | A | |
| JP | 2019-105008 | A | 27 June 2019 | (Family: none) | | | |
| JP | 09-316272 | A | 09 December 1997 | US claims, examples | 5811488 | A | |
| | | | | EP | 810254 | A1 | |
| | | | | KR | 10-1997-0074803 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018061272 A